(19) **Europäisches Patentamt**
**European Patent Office**
**Office européen des brevets**

(11) **EP 1 973 769 B1**

(12) **FASCICULE DE BREVET EUROPEEN**

(45) Date de publication et mention
de la délivrance du brevet:
**21.10.2009 Bulletin 2009/43**

(51) Int Cl.:
***B60W 40/10*** *(2006.01)*

(21) Numéro de dépôt: **07718207.9**

(22) Date de dépôt: **03.01.2007**

(86) Numéro de dépôt international:
**PCT/FR2007/050606**

(87) Numéro de publication internationale:
**WO 2007/083047 (26.07.2007 Gazette 2007/30)**

(54) **PROCEDE D'ESTIMATION DE LA VITESSE LONGITUDINALE D'UN VEHICULE AUTOMOBILE**

VERFAHREN ZUR SCHÄTZUNG DER LÄNGSGESCHWINDIGKEIT EINES KRAFTFAHRZEUGS

METHOD FOR ESTIMATING THE LONGITUDINAL SPEED OF A MOTOR VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.01.2006 FR 0600530**

(43) Date de publication de la demande:
**01.10.2008 Bulletin 2008/40**

(73) Titulaire: **Renault SAS**
**92100 Boulogne Billancourt (FR)**

(72) Inventeurs:
• **GUEGAN, Stéphane**
**F-78000 Versailles (FR)**
• **TOFFOLO, Gabriel**
**F-91140 Villejust (FR)**

(56) Documents cités:
**EP-A2- 0 539 060        DE-A1- 10 122 653**
**FR-A- 2 871 889        US-A- 5 371 688**
**US-A1- 2004 093 945        US-B1- 6 816 804**

**EP 1 973 769 B1**

**Description**

L'invention concerne un procédé d'estimation de la vitesse longitudinale d'un véhicule automobile à deux roues motrices, à partir des vitesses de rotation de ses quatre roues.

La plupart des systèmes pilotés d'un véhicule, tels que le système de freinage, la direction assistée électrique, le système de commande des quatre roues quand elles sont directrices, ont besoin de l'information sur la vitesse longitudinale du véhicule. Elle est généralement estimée à partir des vitesses de rotation des quatre roues, mesurées par des capteurs.

Un des problèmes techniques de cette estimation vient des « sauts » non réalistes, c'est-à-dire des gradients de vitesse trop importants pour correspondre à une variation réelle de la vitesse du véhicule, que ce soit en situation nominale ou en cas de défaillance non détectée d'un ou plusieurs capteurs de vitesse de rotation des roues.

Les procédés d'estimation actuels qui ne sont pas susceptibles de provoquer des gradients de vitesse importants, utilisent un capteur d'accélération longitudinale du véhicule, comme cela est décrit par exemple dans le brevet américain US 6 792 803, au nom de CONTINENTAL TEVES Inc. Mais une telle solution est coûteuse en raison de l'ajout d'un capteur sur le véhicule.

US 2004/093945 A1 est considéré comme l'art antérieur le plus proche et révèle, selon le préambule de la revendication 1, un procédé d'estimation de la vitesse longitudinale d'un véhicule automobile, équipé de deux roues motrices et d'au moins une unité centrale électronique dont un automate réalise le procédé à partir des vitesses de rotation des quatre roues dont deux sont motrices.

L'invention propose une estimation à partir des informations délivrées par les quatre capteurs de vitesse de roue et présente l'avantage d'avoir une dynamique des écarts par rapport à la vitesse réelle du véhicule qui reste faible, même dans les situations de régulation ABS (Anti Blocking System), ou ESP (Electronic Stability Program), ou ASR, de virage, de forts glissements d'une ou plusieurs roues, de défaillance non détectée d'un capteur de vitesse de roue ou bien encore de blocage ou de patinage d'une ou plusieurs roues. De plus, le procédé selon l'invention est simple à mettre en oeuvre dans une unité centrale électronique du véhicule, telle que celle contrôlant le freinage par exemple.

Le procédé d'estimation de la vitesse longitudinale d'un véhicule, équipé de deux roues motrices et d'au moins une unité centrale électronique dont un automate réalise ledit procédé à partir des vitesses de rotation des quatre roues, dont deux sont motrices, est **caractérisé en ce que :**

- en accélération, la vitesse longitudinale est comparée à la vitesse de la troisième roue la plus rapide, et son accélération ne doit pas dépasser celle de la roue la plus lente ;
- en décélération, la vitesse longitudinale est comparée à la vitesse de la roue la plus rapide et son accélération en valeur absolue ne doit pas dépasser celle de la deuxième roue la plus rapide ;
- lorsque la vitesse longitudinale est comprise entre la vitesse de la troisième roue la plus rapide et celle de la roue la plus rapide, sa valeur reste constante.

Selon une autre caractéristique du procédé d'estimation selon l'invention, en phase d'accélération, le gradient de la vitesse du véhicule entre deux instants consécutifs t-1 et t est obtenu à partir du produit de la dérivée temporelle de la vitesse de la roue la plus lente $V_{max4}$ par la durée $T_e$ d'un cycle de calcul, auquel est ajouté un terme $V_s$ équivalent à une accélération supplémentaire, déterminé par sécurité :

$$V_{ref}(t) = V_{ref}(t-1) + grad_+$$
$$= V_{ref}(t-1) + \left[ \frac{dV_{max4}}{dt} * T_e * 3,6 + V_s \right]$$

ledit gradient de vitesse étant saturé entre un seuil inférieur de valeur nulle et un seuil maximal correspondant à l'accélération maximale que peut supporter le véhicule compte tenu des performances de son moteur.

Selon une autre caractéristique du procédé d'estimation selon l'invention, en phase de décélération, le gradient de la vitesse du véhicule entre deux instants consécutifs t-1 et t est obtenu à partir du produit de la dérivée temporelle de la vitesse de la deuxième roue la plus rapide $V_{max2}$ par la durée $T_e$ d'un cycle de calcul, auquel est retranché un terme $V_s$ équivalent à une accélération supplémentaire, déterminée par sécurité :

$$V_{ref} = V_{ref}(t-1) + grad_-$$
$$= V_{ref}(t-1) + \left[ \frac{dV_{max2}}{dt} * T_e * 3,6 - V_s \right]$$

ledit gradient de vitesse étant saturé entre un seuil maximal de valeur nulle et un seuil minimal correspondant à la décélération maximale que peut supporter le véhicule, compte tenu de ses pneumatiques.

Selon une autre caractéristique du procédé d'estimation selon l'invention, entre une phase d'accélération et une phase de décélération consécutives, si la valeur de la vitesse du véhicule est comprise entre celle de la troisième roue la plus rapide et celle de la roue la plus rapide, cette valeur reste constante à chaque cycle de calcul.

D'autres caractéristiques et avantages de l'invention apparaîtront à la lecture de la description illustrée par les figures suivantes qui sont :

- la figure 1 : un schéma de principe du procédé d'estimation selon l'invention ;
- la figure 2 : les variations dans le temps de la vitesse longitudinale du véhicule et des vitesses des roues ;
- la figure 3 : l'organigramme des différentes étapes du calcul de la vitesse en fonction du déplacement du véhicule, selon l'invention.

Le procédé d'estimation de la vitesse longitudinale du véhicule selon l'invention est basé sur l'information de vitesse de rotation $\omega_1$ des quatre roues du véhicule, ramenée en vitesse linéaire $V_i$. Ces quatre vitesses de rotation sont délivrées par les capteurs de vitesse de roue, habituellement montés sur le véhicule pour les systèmes pilotés de freinage, ou de contrôle de trajectoire entre autres.

Ces quatre vitesses linéaires de roue sont classées par ordre décroissant, à chaque cycle de calcul, établi à 10 ms environ, et répertoriées de la vitesse de roue la plus rapide $V_{max}$ à la vitesse de la quatrième roue la plus rapide c'est-à-dire la roue la plus lente $V_{max4}$. Le procédé s'applique à un véhicule à deux roues motrices.

En phase d'accélération, la vitesse $V_{ref}$ du véhicule est comparée à la vitesse de la troisième roue la plus rapide, soit $V_{max3}$, réactualisée à chaque cycle de calcul de durée $T_e$, et son accélération est calculée pour ne pas dépasser celle de la roue la plus lente parmi les quatre. Pour cela, la vitesse $V_{max4}$ de cette roue la plus lente est dérivée et le gradient de la vitesse $V_{ref}$ du véhicule entre les instants t-1 et t est égal au produit de cette dérivée de la vitesse de la roue la plus lente $V_{max4}$ par la durée $T_e$ d'un cycle de calcul, auquel on ajoute un terme $V_s$ qui est équivalent à une accélération supplémentaire de 0,2g par sécurité. En effet, dans le cas d'un système à quatre roues directrices, une dérive de la vitesse longitudinale équivalente à 0,2g n'est pas sécuritaire. Ainsi, le gradient de la vitesse de référence s'écrit en km/h par l'équation suivante :

$$V_{ref}(t) - V_{ref}(t-1) = \frac{dV_{max4}}{dt} * T_e * 3,6 + V_s$$

$$V_{ref}(t) - V_{ref}(t-1) = \frac{dV_{max4}}{dt} * T_e * 3,6 + 0,2g * T_e * 3,6$$

Comme l'accélération maximale que peut supporter physiquement un véhicule est égale à 0,65g compte tenu des performances de son moteur, le gradient de vitesse est limité entre un seuil inférieur égal à 0 et un seuil supérieur égal à $0,65g * T_e$. Ainsi, dans le cas où le gradient est inférieur au seuil maximal, sa valeur est ajoutée à la valeur de la vitesse $V_{ref}(t-1)$ estimée au cycle de calcul précédent pour déterminer la nouvelle valeur de la vitesse $V_{ref}(t)$. Dans le cas où le gradient est supérieur à ce seuil maximal, c'est cette dernière valeur qui sera prise en compte pour déterminer la nouvelle valeur de la vitesse du véhicule :

$$V_{ref}(t) = V_{ref}(t-1) + grad_+$$

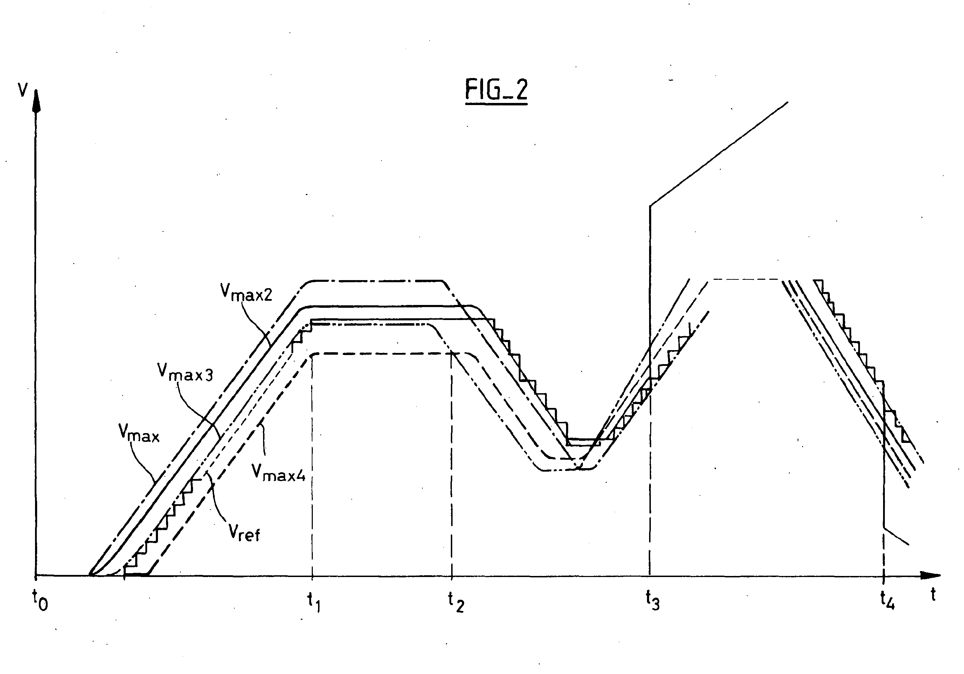

Sur les courbes de variation temporelle des vitesses maximales $V_{max}$, $V_{max2}$, $V_{max3}$ et $V_{max4}$ des quatre roues du véhicule, représentées sur la figure 2, on constate que, entre les instants t0 et t1, la vitesse estimée du véhicule $V_{ref}$ suit l'évolution des deux vitesses les plus faibles, et son accélération n'est pas plus grande que celle de la roue la plus lente à laquelle est ajoutée une accélération supplémentaire de 0,2g. En cas de panne ou de défaillance d'un des capteurs de ces deux roues les plus lentes, à l'instant t3, la vitesse estimée du véhicule ne présentera pas de « saut », c'est-à-dire de gradient trop important, puisqu'elle suit l'accélération de la roue la plus lente. La courbe de la vitesse estimée du véhicule est représentée en traits interrompus et une défaillance du capteur de la troisième roue la plus rapide est représentée par un échelon de la vitesse mesurée $V_{max3}$.

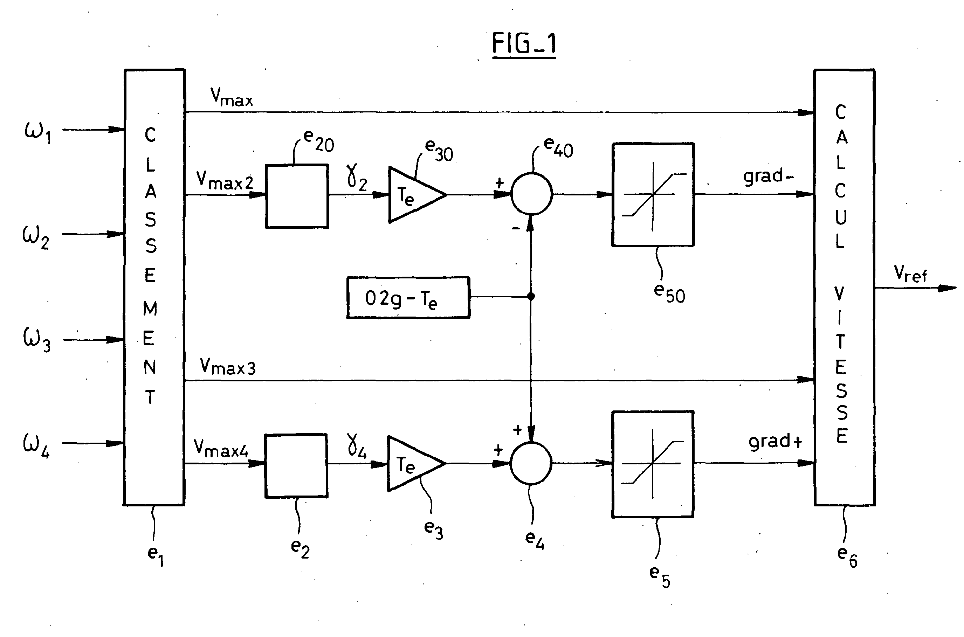

Dans le schéma de principe de la figure 1, le procédé prend en compte la vitesse $V_{max4}$ de la roue la plus lente, déterminée par l'étape $e_1$) de classement des vitesses de roue en ordre décroissant, la dérive par rapport au temps dans une étape $e_2$) de filtrage dérivateur à 1 Hz par exemple, pour atténuer le bruit généré par la dérivation numérique, afin d'obtenir l'accélération $\gamma_4$ de cette roue qui est ensuite multipliée, à l'étape $e_3$) par le cycle de calcul $T_e$. A ce produit ainsi obtenu est ajoutée une accélération de 0,2 g à l'étape $e_4$) et le gradient de vitesse ainsi obtenu est saturé à l'étape $e_5$) entre un seuil minimal de valeur nulle et un seuil maximal correspondant à une accélération de 0,65 g pour délivrer le gradient de vitesse grad$_+$ qui permet le calcul de la vitesse du véhicule en phase d'accélération, à l'étape $e_6$).

En phase de décélération, l'accélération du véhicule est estimée à partir de la deuxième roue la plus rapide $V_{max2}$ et la vitesse du véhicule $V_{ref}$ est comparée à la vitesse de la roue la plus rapide $V_{max}$. Comme le montre le schéma de la figure 1, la vitesse $V_{max2}$ de la deuxième roue la plus rapide est dérivée à l'étape $e_{20}$) par un filtrage dérivateur à 1 Hz par exemple, pour obtenir l'accélération $\gamma_2$ de cette roue, qui est ensuite multipliée par le cycle de calcul $T_e$ à l'étape $e_{30}$). Une accélération de 0, 2 g supplémentaire, pour ce même cycle de calcul $T_e$, est retranchée à l'étape $e_{40}$) pour obtenir un gradient de vitesse, qui est saturé à l'étape $e_{50}$) par deux seuils, un seuil supérieur égale à 0 et un seuil inférieur correspondant à la décélération maximale que peut physiquement supporter le véhicule, compte tenu de ses pneumatiques, soit -1,25 g. La vitesse $V_{ref}$ du véhicule est calculée à l'étape $e_6$).

Sur les courbes de variation temporelle des vitesses maximales $V_{max}$, $V_{max2}$, $V_{max3}$ et $V_{max4}$ des quatre roues du véhicule, représentées sur la figure 2, on constate que, entre les instants t2 et t3, la vitesse estimée du véhicule $V_{ref}$ suit l'évolution des deux roues les plus rapides, et sa décélération est inférieure à celle de la deuxième roue la plus rapide, à laquelle est ajoutée une accélération supplémentaire de 0,2g.

En cas de défaillance du capteur de vitesse d'une des deux roues qui ont les vitesses de rotation les plus grandes, à l'instant t4 par exemple, l'accélération du véhicule ne peut pas être inférieure à celle de la roue la plus rapide dont le capteur fonctionne puisqu'elle suit la variation de la deuxième roue la plus rapide du véhicule.

Le gradient de la vitesse du véhicule en décélération s'écrit en km/h :

$$V_{ref}(t) - V_{ref}(t-1) = \frac{dV_{max2}}{dt} * T_e * 3,6 - V_s$$

$$V_{ref}(t) - V_{ref}(t-1) = \frac{dV_{max2}}{dt} * T_e * 3,6 - 0,2g * T_e * 3,6$$

Si ce gradient est plus grand en valeur absolue que le seuil minimal précité, c'est cette valeur égale à -1,25 $gT_e$ qui sera retenue comme gradient grad_ de la vitesse en décélération :

$$V_{ref}(t) = V_{ref}(t-1) + grad_-$$

Sur les courbes de variation temporelle des vitesses maximales $V_{max}$, $V_{max2}$, $V_{max3}$ et $V_{max4}$ des quatre roues du véhicule, représentées sur la figure 2, on constate que, entre les instants t2 et t3, la vitesse estimée du véhicule $V_{ref}$ suit l'évolution des deux roues les plus rapides, et sa décélération est inférieure à celle de la deuxième roue la plus rapide, à laquelle est ajoutée une accélération supplémentaire de 0,2g.

Entre ces deux phases d'accélération et de décélération consécutives quand la vitesse du véhicule est constante, elle est comparée à la vitesse $V_{max3}$ de la troisième roue la plus rapide d'une part et à la vitesse $V_{max}$ de la roue la plus rapide d'autre part, et sa valeur reste la même à chaque cycle de calcul $T_e$, son gradient étant nul, comme le montre la figure 2 entre les instants t1 et t2 :

$$V_{ref}(t) = V_{ref}(t-1)$$

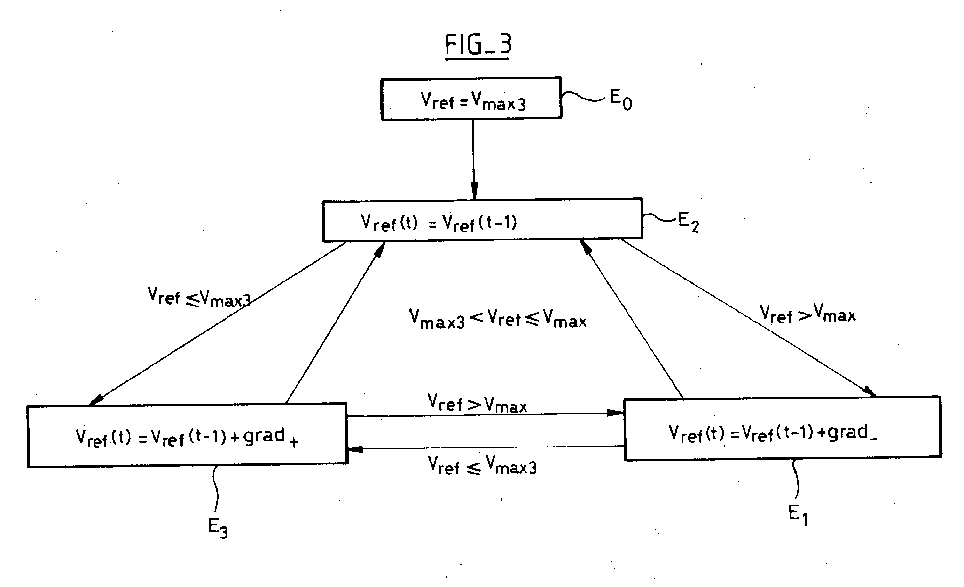

L'organigramme de la figure 3 décrit les différentes étapes du calcul de la vitesse du véhicule en fonction de son déplacement, depuis l'état initial $E_0$ à l'instant t0 de démarrage du véhicule, qui est l'état d'entrée de l'automate réalisant le procédé dans une unité centrale électronique du véhicule. La vitesse $V_{ref}$ du véhicule prend la valeur $V_{max3}$ de la troisième roue la plus rapide. Au cycle suivant, la transition est immédiate vers l'état $E_2$, défini par un calcul de la vitesse du véhicule à l'instant t, égale à la valeur à l'instant précédent t-1, le gradient de vitesse $grad_0$ étant nul.

Si la vitesse $V_{ref}$ est inférieure ou égale à la valeur de la troisième roue la plus rapide $V_{max3}$, le procédé passe à l'état $E_3$ pour lequel la vitesse du véhicule à l'instant t est égale à la valeur à l'instant précédent t-1, à laquelle est ajoutée le gradient $grad_+$ déterminé en accélération.

Si la vitesse $V_{ref}$ est supérieure à la valeur de la troisième roue la plus rapide $V_{max3}$ mais inférieure ou égale à celle $V_{max}$ de la roue la plus rapide, le procédé repasse à l'état $E_2$ pour lequel la vitesse doit rester constante, son gradient étant nul.

Si la vitesse $V_{ref}$ est supérieure à la vitesse $V_{max}$ de la roue la plus rapide, en provenance soit de l'état $E_2$ soit de l'état $E_3$, le procédé passe à l'état $E_1$ pour lequel la vitesse du véhicule à l'instant t est égale à la valeur à l'instant précédent t-1, à laquelle est ajouté le gradient $grad\_$ déterminé en décélération.

Ainsi, le véhicule accède à l'état $E_1$ depuis les deux états $E_2$ et $E_3$ quand $V_{ref} > V_{max}$ Dans cet état $E_1$, sa vitesse longitudinale est décrémentée de la valeur de $grad\_$ à chaque cycle de calcul $T_e$ :

$$V_{ref}(t) = V_{ref}(t-1) + grad\_$$

Le véhicule accède à l'état $E_2$ depuis l'état initial $E_0$, ou depuis les états $E_1$ ou $E_3$ quand $V_{max3} < V_{ref} \leq V_{max}$, et la valeur de sa vitesse reste constante : $V_{ref} = V_{max3}$

Le véhicule accède à l'état $E_3$ depuis les états $E_1$ et $E_2$ quand $V_{ref} \leq V_{max3}$ , et sa vitesse longitudinale est augmentée de $grad_+$ à chaque cycle de calcul $T_e$ :

$$V_{ref}(t) = V_{ref}(t-1) + grad_+$$

L'invention présente plusieurs avantages, dont celui de ne pas utiliser de capteur supplémentaire, notamment de capteur d'accélération longitudinale du véhicule et d'éviter tout gradient de vitesse non réaliste. Elle sera avantageusement utilisée en entrée des lois de commande du système de pilotage des quatre roues directrices d'un véhicule.

**Revendications**

1. Procédé d'estimation de la vitesse longitudinale d'un véhicule automobile, équipé de deux roues motrices et d'au moins une unité centrale électronique dont un automate réalise le procédé à partir des vitesses de rotation des quatre roues dont deux sont motrices, **caractérisé en ce que,** après classement des vitesses de rotation par ordre décroissant :

   - en phase d'accélération, la vitesse longitudinale du véhicule est comparée à la vitesse de la troisième roue la plus rapide, et son accélération ne doit pas dépasser celle de la roue la plus lente ;
   - en décélération, la vitesse longitudinale est comparée à la vitesse de la roue la plus rapide et son accélération en valeur absolue ne doit pas dépasser celle de la deuxième roue la plus rapide ;
   - lorsque la vitesse longitudinale est comprise entre la vitesse de la troisième roue la plus rapide et celle de la roue la plus rapide, sa valeur reste constante.

2. Procédé d'estimation selon la revendication 1, **caractérisé en ce qu'**en phase d'accélération, le gradient de la vitesse du véhicule entre deux instants consécutifs (t-1) et (t) est obtenu à partir du produit de la dérivée temporelle de la vitesse de la roue la plus lente ($V_{max4}$) par la durée ($T_e$) d'un cycle de calcul, auquel est ajouté un terme ($V_s$)

équivalent à une accélération supplémentaire, déterminé par sécurité selon la formule :

$$V_{ref}(t) = V_{ref}(t-1) + grad_+$$

$$= V_{ref}(t-1) + \left[ \frac{dV_{max4}}{dt} * T_e * 3,6 + V_s \right]$$

ledit gradient de vitesse étant saturé par un seuil minimal de valeur nulle et un seuil maximal correspondant à l'accélération maximale que peut supporter le véhicule compte tenu des performances de son moteur.

3.  Procédé d'estimation selon la revendication 1, **caractérisé en ce qu'**en phase de décélération, le gradient de la vitesse du véhicule entre deux instants consécutifs (t-1) et (t) est obtenu à partir du produit de la dérivée temporelle de la vitesse de la deuxième roue la plus rapide ($V_{max2}$) par la durée ($T_e$) d'un cycle de calcul, auquel est retranché un terme ($V_s$) équivalent à une accélération supplémentaire, déterminée par sécurité selon la formule :

$$V_{ref} = V_{ref}(t-1) + grad_-$$

$$= V_{ref}(t-1) + \left[ \frac{dV_{max2}}{dt} * T_e * 3,6 - V_s \right]$$

ledit gradient de vitesse étant saturé par un seuil maximal de valeur nulle et un seuil minimal correspondant à la décélération maximale que peut supporter le véhicule, compte tenu de ses pneumatiques.

4.  Procédé d'estimation selon la revendication 1, **caractérisé en ce qu'**entre une phase d'accélération et une phase de décélération, si la valeur de la vitesse du véhicule est comprise entre celle de la troisième roue la plus rapide et celle de la roue la plus rapide, cette valeur reste constante à chaque cycle de calcul.

5.  Procédé d'estimation selon lés revendications 1 à 4, **caractérisé en ce que** les différentes étapes du calcul de la vitesse du véhicule en fonction de son déplacement, depuis l'état initial ($E_0$) à l'instant de démarrage du véhicule, où la vitesse ($V_{ref}$) du véhicule prend la valeur ($V_{max3}$) de la troisième roue la plus rapide, sont les suivantes :

    - au cycle suivant, la transition est immédiate vers l'état ($E_2$), défini par un calcul de la vitesse du véhicule à l'instant (t), égale à la valeur à l'instant précédent (t-1), le gradient de vitesse ($grad_0$) étant nul,
    - si la vitesse ($V_{ref}$) est inférieure ou égale à la valeur de la troisième roue la plus rapide ($V_{max3}$), passage de l'état ($E_2$) à l'état ($E_3$) pour lequel la vitesse du véhicule à l'instant (t) est égale à la valeur à l'instant précédent (t-1), auquel est ajouté le gradient ($grad_+$) déterminé en accélération,
    - si la vitesse ($V_{ref}$) est supérieure à la vitesse ($V_{max}$) de la roue la plus rapide, en provenance soit de l'état ($E_2$) soit de l'état ($E_3$), passage à l'état ($E_1$) pour lequel la vitesse du véhicule à l'instant t est égale à la valeur à l'instant précédent (t-1), à laquelle est retranchée le gradient ($grad_-$) déterminé en décélération,
    - si la vitesse ($V_{ref}$) est supérieure à la valeur de la troisième roue la plus rapide ($V_{max3}$) mais inférieure à celle ($V_{max}$) de la roue la plus rapide, en provenance soit de l'état ($E_1$) soit de l'état ($E_3$), retour à l'état ($E_2$) pour lequel la vitesse doit rester constante, son gradient étant nul.

**Claims**

1.  Method of estimating the longitudinal speed of a motor vehicle equipped with two driven wheels and with at least one electronic central processing unit of which a controller runs the method on the basis of the rotational speeds of the four wheels, two of which are driven, **characterized in that,** once the rotational speeds have been ranked in decreasing order:

    - in an acceleration phase, the longitudinal speed of the vehicle is compared with the speed of the third fastest wheel, and its acceleration must not exceed that of the slowest wheel;
    - under deceleration, the longitudinal speed is compared with the speed of the fastest wheel and its acceleration in absolute terms must not exceed that of the second fastest wheel;
- when the longitudinal speed lies between the speed of the third fastest wheel and that of the fastest wheel, its value remains constant.

2. Estimating method according to Claim 1, **characterized in that** in an acceleration phase, the gradient of the speed of the vehicle between two consecutive moments (t-1) and (t) is obtained from the product of the derivative with respect to time of the speed of the slowest wheel ($V_{max4}$) multiplied by the duration ($T_e$) of a calculation cycle, to which there is added a term ($V_s$) equivalent to an additional acceleration, determined as a safety measure according to the formula:

$$V_{ref}(t) = V_{ref}(t-1) + grad_+,$$
$$= V_{ref}(t-1) + \left[ \frac{dV_{max4}}{dt} \times T_e \times 3.6 + V_s \right]$$

said speed gradient being saturated by a minimum threshold of zero value and a maximum threshold corresponding to the maximum acceleration that the vehicle can withstand given the performance of its engine.

3. Estimating method according to Claim 1, **characterized in that** in a deceleration phase, the gradient of the speed of the vehicle between two consecutive moments (t-1) and (t) is obtained from the product of the derivative with respect to time of the speed of the second fastest wheel ($V_{max2}$) multiplied by the duration ($T_e$) of a calculation cycle, from which is subtracted a term ($V_s$) equivalent to an additional acceleration, determined as a safety measure according to the formula:

$$V_{ref} = V_{ref}(t-1) + grad_-,$$
$$= V_{ref}(t-1) + \left[ \frac{dV_{max2}}{dt} \times T_e \times 3.6 - V_s \right]$$

said speed gradient being saturated by a maximum threshold of zero value and a minimum threshold corresponding to the maximum deceleration that the vehicle can withstand given the tires with which it is fitted.

4. Estimating method according to Claim 1, **characterized in that,** between an acceleration phase and a deceleration phase, if the value of the speed of the vehicle lies between that of the third fastest wheel and that of the fastest wheel, this value remains constant for each calculation cycle.

5. Estimating method according to Claims 1 to 4, **characterized in that** the various stages in calculating the speed of the vehicle as a function of its travel, from the initial state ($E_0$) at the moment the vehicle is started, when the speed ($V_{ref}$) of the vehicle adopts the value ($V_{max3}$) of the third fastest wheel, are as follows:

- in the next cycle, transition to the state ($E_2$) defined by calculating the speed of the vehicle at the moment (t), equal to the value at the previous moment (t-1), is immediate, the speed gradient ($grad_0$) being zero,
- if the speed ($V_{ref}$) is lower than or equal to the value of the third fastest wheel ($V_{maX3}$), a switch from the state ($E_2$) to the state ($E_3$) for which the speed of the vehicle at the moment (t) is equal to the value at the previous moment (t-1), to which the gradient (grad+) determined for acceleration is added,
- if the speed ($V_{ref}$) is higher than the speed ($V_{max}$) of the fastest wheel, switching either from the state ($E_2$) or from the state ($E_3$) to the state ($E_1$) for which the speed of the vehicle at the moment t is equal to the value at the previous moment (t-1) from which the gradient (grad_) determined for deceleration is subtracted,
- if the speed ($V_{ref}$) is higher than the value of the third fastest wheel ($V_{max3}$) but lower than that ($V_{max}$) of the fastest wheel, return either from the state ($E_1$) or from the state ($E_3$) to the state ($E_2$) for which the speed has to remain constant, its gradient being zero.

**Patentansprüche**

1. Verfahren zum Schätzen der Längsgeschwindigkeit eines Kraftfahrzeugs, das mit zwei Antriebsrädern und wenigstens einer elektronischen Zentraleinheit ausgerüstet ist, wovon ein Automat das Verfahren anhand der Drehgeschwindigkeiten der vier Räder, wovon zwei angetrieben werden, ausführt, **dadurch gekennzeichnet, dass** nach der Einordnung in der Reihenfolge abnehmender Drehgeschwindigkeiten:

   - in der Beschleunigungsphase die Längsgeschwindigkeit des Fahrzeugs mit der Geschwindigkeit des drittschnellsten Rades verglichen wird, wobei seine Beschleunigung jene des langsamsten Rades nicht übersteigen darf;
   - bei der Verzögerung die Längsgeschwindigkeit mit der Geschwindigkeit des schnellsten Rades verglichen wird, wobei der Absolutwert seiner Beschleunigung jenen des zweitschnellsten Rades nicht übersteigen darf;
   - dann, wenn die Längsgeschwindigkeit zwischen der Geschwindigkeit des drittschnellsten Rades und jener des schnellsten Rades liegt, sein Wert konstant bleibt.

2. Schätzverfahren nach Anspruch 1, **dadurch gekennzeichnet, dass** in der Beschleunigungsphase der Gradient der Fahrzeuggeschwindigkeit zwischen zwei aufeinander folgenden Zeitpunkten (t-1) und (t) erhalten wird anhand des Produkts aus der zeitlichen Ableitung der Geschwindigkeit des langsamsten Rades ($V_{max4}$) und der Dauer ($T_e$) eines Rechenzyklus, zu dem zur Sicherheit ein Term ($V_s$) hinzugefügt wird, der zu einer zusätzlichen Beschleunigung äquivalent ist, und gemäß der folgenden Formel bestimmt wird:

$$V_{ref}(t) = V_{ref}(t-1) + grad_+ =$$
$$= V_{ref}(t-1) + \left[ \frac{dV_{max\,4}}{dt} * T_e * 3{,}6 + V_s \right]$$

   wobei der Geschwindigkeitsgradient durch einen minimalen Schwellenwert mit Wert Null und durch einen maximalen Schwellenwert, der der maximalen Beschleunigung entspricht, die das Fahrzeug unter Berücksichtigung des Leistungsverhaltens seines Motors unterstützen kann, gesättigt ist.

3. Schätzverfahren nach Anspruch 1, **dadurch gekennzeichnet, dass** in der Verzögerungsphase der Gradient der Fahrzeuggeschwindigkeit zwischen zwei aufeinander folgenden Zeitpunkten (t-1) und (t) erhalten wird anhand des Produkts aus der zeitlichen Ableitung der Geschwindigkeit des zweitschnellsten Rades ($V_{max2}$) und der Dauer ($T_e$) eines Rechenzyklus, von dem zur Sicherheit ein Term ($V_s$) abgezogen wird, der zu einer zusätzlichen Beschleunigung äquivalent ist, und gemäß der Formel bestimmt wird:

$$V_{ref} = V_{ref}(t-1) + grad_- =$$
$$= V_{ref}(t-1) + \left[ \frac{dV_{max\,2}}{dt} * T_e * 3{,}6 - V_s \right]$$

   wobei der Geschwindigkeitsgradient durch einen maximalen Schwellenwert mit Wert Null und durch einen minimalen Schwellenwert, der der maximalen Verzögerung entspricht, die das Fahrzeug unter Berücksichtigung seiner Bereifung unterstützen kann, gesättigt ist.

4. Schätzverfahren nach Anspruch 1, **dadurch gekennzeichnet, dass** zwischen einer Beschleunigungsphase und einer Verzögerungsphase dann, wenn der Wert der Fahrzeuggeschwindigkeit zwischen jener des drittschnellsten Rades und jener des schnellsten Rades liegt, dieser Wert in jedem Rechenzyklus konstant bleibt.

5. Schätzverfahren nach den Ansprüchen 1 bis 4, **dadurch gekennzeichnet, dass** die verschiedenen Schritte zum Berechnen der Fahrzeuggeschwindigkeit als Funktion seiner Versetzung aus dem Anfangszustand ($E_0$) zum Zeitpunkt des Startens des Fahrzeugs, in dem die Geschwindigkeit ($V_{ref}$) des Fahrzeugs den Wert ($V_{max3}$) des drittschnellsten Rades annimmt, die folgenden Schritte sind:

   - im folgenden Zyklus erfolgt der Übergang zum Zustand ($E_2$), der durch eine Berechnung der Fahrzeuggeschwindigkeit zum Zeitpunkt (t) definiert ist, die gleich dem Wert zum vorhergehenden Zeitpunkt (t-1) ist, un-

mittelbar, wobei der Geschwindigkeitsgradient (grad$_0$) gleich null ist,

- falls die Geschwindigkeit (V$_{ref}$) kleiner oder gleich dem Wert des drittschnellsten Rades (V$_{max3}$) ist, erfolgt ein Übergang vom Zustand (E$_2$) zum Zustand (E$_3$), für den die Fahrzeuggeschwindigkeit zum Zeitpunkt (t) gleich dem Wert zum vorhergehenden Zeitpunkt (t-1) ist, zu dem der bei der Beschleunigung bestimmte Gradient (grad$_+$) hinzugefügt ist,

- falls die Geschwindigkeit (V$_{ref}$) größer als die Geschwindigkeit (V$_{max}$) des schnellsten Rades ist, erfolgt ausgehend vom Zustand (E$_2$) oder vom Zustand (E$_3$) ein Übergang in den Zustand (E$_1$), für den die Fahrzeuggeschwindigkeit zum Zeitpunkt (t) gleich dem Wert zum vorhergehenden Zeitpunkt (t-1) ist, von dem der bei der Verzögerung bestimmte Gradient (grad_) abgezogen ist,

- falls der Wert (V$_{ref}$) größer als der Wert des drittschnellsten Rades (V$_{max3}$) ist, jedoch kleiner als jener (V$_{max}$) des schnellsten Rades ist, erfolgt ausgehend vom Zustand (E$_1$) oder vom Zustand (E$_3$) eine Rückkehr zum Zustand (E$_2$), für den die Geschwindigkeit konstant bleiben soll und bei dem der Gradient Null ist.

FIG_1

EP 1 973 769 B1

FIG_2

EP 1 973 769 B1

FIG_3

**EP 1 973 769 B1**

## RÉFÉRENCES CITÉES DANS LA DESCRIPTION

**Documents brevets cités dans la description**

- US 6792803 B

- US 2004093945 A1